# EUROPÄISCHE PATENTSCHRIFT

(11) **EP 3 142 247 B1**
(45) Veröffentlichungstag und Bekanntmachung des Hinweises auf die Patenterteilung: **23.03.2022**
(21) Anmeldenummer: 16172174.1
(22) Anmeldetag: 31.05.2016
(51) Int. Cl.: H02P 29/04, H02P 3/04, H02P 29/00, F16D 65/18, B60T 13/04, F16D 121/14, F16D 121/22, B60T 13/74

(54) **SCHALTUNGSANORDNUNG**
SWITCHING ASSEMBLY
CIRCUIT

(30) Priorität: 28.08.2015 DE 102015216496
(43) Veröffentlichungstag der Anmeldung: 15.03.2017
(73) Patentinhaber: Dr. Johannes Heidenhain GmbH, 83301 Traunreut (DE)
(72) Erfinder: SCHÖNLINNER, Markus, 84529 Tittmoning (DE); von LE SUIRE, Christian, 83339 Chieming (DE)

(56) Entgegenhaltungen:
- EP-A1- 1 657 815
- EP-A2- 1 445 852
- EP-B1- 2 503 682
- DE-A1-102007 062 779
- US-A1- 2006 091 870
- US-A1- 2008 116 828
- MOGHIMI R: "Curing comparator instability with hysteresis", ANALOG DIALOGUE, ANALOG DEVICES, NORWOOD, MA, US, Bd. 34, Nr. 7, 2. November 2000 (2000-11-02), Seite 3pp, XP002386469, ISSN: 0161-3626
- Ti: "LM615 Quad Comparator and Adjustable Reference (SNOS599A)", , 2. Dezember 1994 (1994-12-02), Seiten 1-14, XP055339339, 1111 West Bardin Road, Arlington, TX 76017 Gefunden im Internet: URL:http://www.ti.com/lit/ds/symlink/lm615 .pdf [gefunden am 2017-01-26]
- Stmicroelectronics: "AN1772 APPLICATION NOTE How to Control Power-up/Reset and Monitor the Voltage in Microprocessor Systems using ST Reset Circuits", , 30. November 2003 (2003-11-30), XP055275348, Gefunden im Internet: URL:http://www.st.com/content/ccc/resource /technical/document/application_note/6a/d4 /19/d3/88/02/44/be/CD00059552.pdf/files/CD 00059552.pdf/jcr:content/translations/en.C D00059552.pdf [gefunden am 2016-05-25]
- KUMBHAR MAHESH ET AL: "Magnetostatic analysis and power optimization of electric release brake", 2014 ANNUAL INTERNATIONAL CONFERENCE ON EMERGING RESEARCH AREAS: MAGNETICS, MACHINES AND DRIVES (AICERA/ICMMD), IEEE, 24 July 2014 (2014-07-24), pages 1-4, XP032648199, DOI: 10.1109/AICERA.2014.6908234 [retrieved on 2014-09-23] & Burr-Brown: "PWM SOLENOID/VALVE DRIVER", , 1 January 1998 (1998-01-01), XP055640944, Retrieved from the Internet: URL:https://www.bg-electronics.de/datenbla etter/Schaltkreise/DRV102.pdf [retrieved on 2019-11-11]

## Beschreibung

### GEBIET DER TECHNIK

Die vorliegende Erfindung betrifft eine Schaltungsanordnung zur Versorgung einer elektromagnetischen Haltebremse eines Elektromotors mit einer Betriebsspannung zum Lösen der Haltebremse, sowie einer gegenüber der Betriebsspannung reduzierten Spannung zum Halten der geöffneten Haltebremse.

### STAND DER TECHNIK

Elektromagnetische Haltebremsen dienen dazu, die Welle eines Motors zu halten, solange dieser außer Betrieb gesetzt ist und sich nicht bewegen darf, auch unter einem von außen zugeführten Drehmoment. Der sichere Zustand einer solchen Haltebremse ist der Zustand, in dem die Haltebremse eingefallen ist und die Welle festgehalten ist. Elektromagnetische Haltebremsen sind daher so ausgelegt, dass sie mittels eines Elektromagneten gelöst werden, an den eine Betriebsspannung angelegt wird, um die Bremsbacken zu lüften. Schaltet man diese Betriebsspannung ab, oder fällt die Betriebsspannung aus anderen Gründen aus, so werden die Bremsbacken durch mechanische Federn wieder gegen die Welle gedrückt.

Elektromagnetische Haltebremsen finden auch im Zusammenhang mit Linearmotoren Anwendung. Dort fixieren sie im stromlosen Zustand den Läufer am Stator.

Es ist aus der US 3614565 bekannt, zum Lösen einer Haltebremse eine höhere Betriebsspannung zu verwenden als zum Halten der Bremse im geöffneten Zustand. Dadurch kann die Bremse einerseits schneller geöffnet werden, andererseits wird die im Elektromagnet entstehende Wärme während dem Betrieb des Motors deutlich reduziert.

In der EP 2503682 B1 ist eine Schaltungsanordnung beschrieben, bei der die unterschiedlichen Spannungen zum Öffnen der Bremse bzw. Halten der bereits geöffneten Bremse mittels einer Pulsweitenmodulation eingestellt werden. Die Spannung am Elektromagnet der Haltebremse entspricht dabei dem zeitlichen Mittelwert der anliegenden Spannungspulse. In dieser Schrift ist offenbart, dass es in der dezentralen Antriebstechnik vorteilhaft ist, wenn der Antriebsregler und die Schaltungsanordnung zur Ansteuerung der Haltebremse unmittelbar im oder am Motor angeordnet sind. In dieser Konfiguration kann der Antriebsregler die Signale zur pulsweitenmodulierten Versorgung der Haltebremse vor Ort erzeugen. In manchen Bereichen der Technik ist aber eher eine zentrale Antriebsregelung gefordert, etwa mittels einer Numerischen Steuerung an einer mehrachsigen Werkzeugmaschine. Gemäß der EP 2503682 B1 ist dann zusätzlich zur Versorgungsleitung zum Übertragen der Bremsenspannung eine Sensorleitung nötig, die die Spannung oder den Strom direkt an der Haltebremse messen und zum zentralen Antriebsregler übertragen. Dadurch kann z.B. ein Spannungsabfall an der Versorgungsleitung erkannt und durch ein angepasstes Tastverhältnis bei der Pulsweitenmodulation ausgeglichen werden. Eine solche zusätzliche Sensorleitung bedeutet jedoch einen erhöhten Aufwand bei der Verkabelung einer Antriebslösung, und auch eine zusätzliche Fehlerquelle.

Die DE 102007062779 A1 offenbart eine Schaltungsanordnung zur Versorgung einer elektromagnetischen Haltebremse eines Elektromotors mit einer Betriebsspannung zum Lösen der Haltebremse, sowie mit einer gegenüber der Betriebsspannung reduzierten Haltespannung zum Halten der geöffneten Haltebremse, wobei die Betriebsspannung von einer übergeordneten, von Motor und Haltebremse getrennt angeordneten Steuerung zugeführt ist. Die Schaltungsanordnung ist in oder am Motor angeordnet und enthält einen Spannungsregler, der die reduzierte Spannung nach dem Lösen der Haltebremse unabhängig von der Betriebsspannung auf einen festen Wert regelt.

Die EP 1445852 A2 offenbart ein Verfahren und eine Vorrichtung zur aktiven Leistungsfaktorkorrektur. Zur Erzeugung von pulsweitenmodulierten Signalen kommen ein Komparator sowie ein Schaltglied zum Einsatz, wobei das Schaltglied abhängig vom Eingang des Komparators geschaltet wird.

Die US 2008/116828 A1 offenbart eine Schaltungsanordnung zur Versorgung einer elektromagnetischen Haltebremse eines Elektromotors, die einen Komparator umfasst, der eine Referenzspannung mit einer an der Haltebremse abgegriffenen und über einen Spannungsteiler zur Verfügung gestellten Spannung vergleicht, und eingerichtet ist, an seinem Ausgang ein pulsweitenmoduliertes Signal zu erzeugen, mit dem ein Schaltelement steuerbar ist, über das die Haltebremse getaktet mit der Betriebsspannung beaufschlagt ist, wodurch sich im Mittel die Haltespannung einstellt.

### ZUSAMMENFASSUNG DER ERFINDUNG

Es ist Aufgabe der vorliegenden Erfindung, eine dezentral angeordnete Schaltungsanordnung zur Versorgung einer elektromagnetischen Haltebremse eines Elektromotors mit einer Betriebsspannung zum Lösen der Haltebremse, sowie einer gegenüber der Betriebsspannung reduzierten Spannung zum Halten der geöffneten Haltebremse anzugeben, die von einer zentralen Steuerung aus lediglich mit der zum Öffnen der Haltebremse notwendigen Betriebsspannung versorgt werden muss.

Diese Aufgabe wird gelöst durch eine Schaltungsanordnung gemäß Anspruch 1. Vorteilhafte Details dieser Schaltungsanordnung ergeben sich auch aus den von Anspruch 1 abhängigen Ansprüchen.

Es wird eine Schaltungsanordnung zur Versorgung einer elektromagnetischen Haltebremse eines Elektromotors mit einer Betriebsspannung zum Lösen der Haltebremse, sowie einer gegenüber der Betriebsspannung reduzierten Spannung zum Halten der geöffneten Haltebremse offenbart.

Motor und Haltebremse bilden hierbei eine Einheit, und die erfindungsgemäße Schaltungsanordnung ist an oder in dieser Einheit angeordnet. Die Betriebsspannung zum Betätigen der Haltebremse wird von außen, von einer separat und entfernt angeordneten, übergeordneten oder zentralen Steuerung zugeführt. Eine einzelne zentrale Steuerung kann dabei mehrere Motoren und deren Haltebremsen ansteuern, etwa an einer Werkzeugmaschine.

Die am oder im Motor bzw. an oder in der Haltebremse angeordnete Schaltungsanordnung muss von einer zentralen Steuerung lediglich mit einer Betriebsspannung beaufschlagt werden, wenn die Haltebremse gelöst werden soll. Wird diese Betriebsspannung wieder abgeschaltet, so fällt die Haltbremse erneut ein. Die zentrale Steuerung muss weder eine pulsweitenmodulierte Betriebsspannung erzeugen, noch muss der Steuerung in irgendeiner Form der Spannungsabfall auf der Versorgungsleitung für Betriebsspannung der Haltebremse mitgeteilt werden. Diese Nachteile des oben genannten Standes der Technik sind gemäß der Erfindung für die zentrale Antriebsregelung überwunden.

Die erfindungsgemäße Schaltungsanordnung sorgt dezentral dafür, dass die Haltebremse schnell (das heißt mit voller Betriebsspannung) gelöst wird, und dass die Bremse im weiteren Verlauf mit einer reduzierten Spannung (Haltespannung) offen gehalten wird, die nicht vom Spannungsabfall auf der Versorgungsleitung der Haltebremse abhängt, um so den Energieverbrauch deutlich zu reduzieren. Außerdem sorgt die Schaltungsanordnung für ein schnelles Einfallen der Haltebremse nach dem Abschalten der Betriebsspannung.

Die dezentral im oder am Motor (bzw. dessen Gehäuse) und damit in unmittelbarer Nähe zur Haltebremse angeordnete Schaltungsanordnung ist dank eines integrierten, als Hysteresewandler eingesetzten Komparators so autark ausgelegt, dass von der zentralen Steuerung lediglich die zum Lüften der Bremse notwendige Betriebsspannung für die Haltebremse zur Verfügung gestellt werden muss. Die Schaltungsanordnung sorgt dann selbsttätig dafür, dass zunächst die volle Betriebsspannung an den Elektromagnet der Haltebremse angelegt und damit die Bremse schnell gelüftet wird. Danach wird durch die Schaltungsanordnung eine mittels Pulsweitenmodulation reduzierte Spannung zum Halten der Bremse im gelüfteten Zustand erzeugt, indem die Betriebsspannung gepulst mit einem passenden Tastverhältnis angelegt wird, so dass die mittlere Spannung über der Haltebremse gerade der Haltespannung entspricht.

Da eine Spannungsregelung erfolgt, können an die Schaltungsanordnung Haltebremsen unterschiedlichen Typs, also insbesondere solche mit unterschiedlicher Stromaufnahme angeschlossen werden.

Der zeitliche Ablauf beim Lösen der Haltebremse, also insbesondere die Dauer der ersten Phase, während der die Haltebremse mit voller Betriebsspannung gelüftet wird, bevor auf Haltespannung umgeschaltet wird, ist durch die Auslegung der einzelnen Bauelemente der Schaltungsanordnung vorgegeben und benötigt keinerlei Eingriff durch eine übergeordnete Steuerung, der zeitliche Ablauf ist sozusagen bereits in der Schaltungsanordnung festgelegt.

Weitere Vorteile und Einzelheiten der vorliegenden Erfindung ergeben sich aus der nachfolgenden Beschreibung eines Ausführungsbeispiels anhand der Figuren.

### KURZE BESCHREIBUNG DER ZEICHNUNGEN

Dabei zeigt
- Figur 1: einen ersten Teil der Schaltungsanordnung,
- Figur 2: einen zweiten Teil der Schaltungsanordnung.

### BESCHREIBUNG DER AUSFÜHRUNGSFORMEN

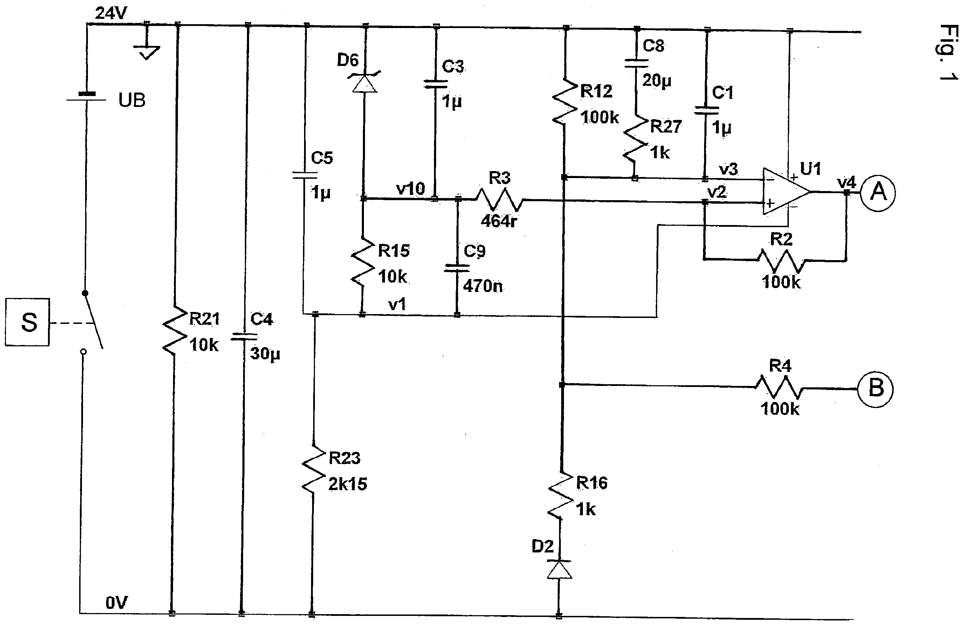

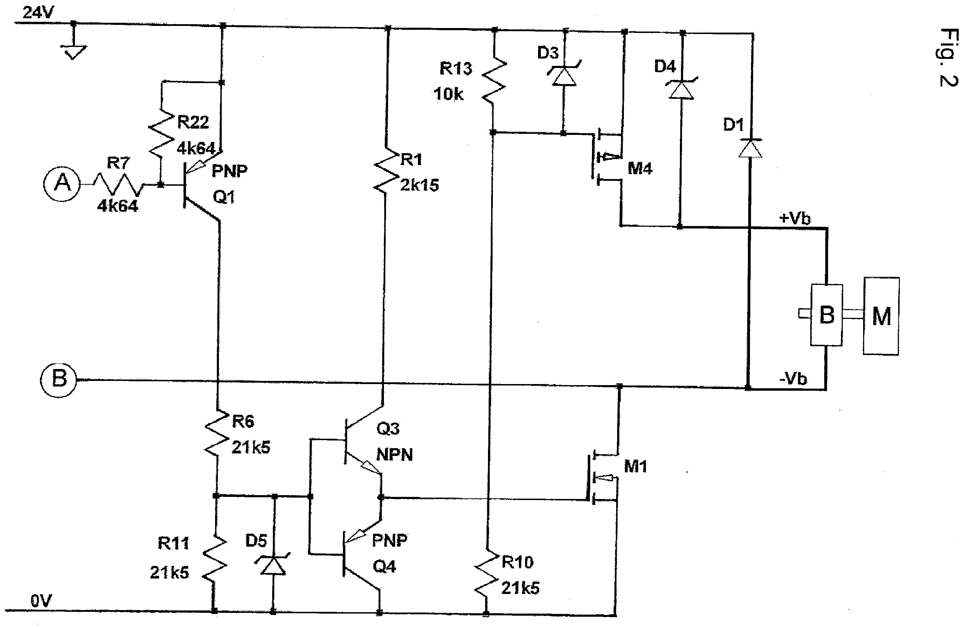

Die Figuren 1 und 2 ergeben in der Zusammenschau das vollständige Schaltbild einer erfindungsgemäßen Schaltungsanordnung gemäß einem ersten Ausführungsbeispiel. Einem Fachmann auf dem Gebiet der Antriebstechnik, insbesondere für elektronische Schaltungen zur Ansteuerung von Komponenten der Antriebstechnik, bietet schon dieses Schaltbild eine umfassende Offenbarung der vorliegenden Erfindung. Im Folgenden werden viele dieser Details im Text erklärt, doch sei ein späterer Rückgriff auf weitere Details der in den Figuren offenbarten Schaltungsanordnung ausdrücklich vorbehalten.

Die Haltebremse B des Motors M ist mit den Klemmen +Vb, -Vb der Schaltungsanordnung verbunden. Die Haltebremse B gibt die Welle des Motors M frei, solange ausreichend Spannung über diese Klemmen angelegt wird.

Wird also von außen eine Betriebsspannung UB an die Klemmen 0V, 24V der Schaltungsanordnung angelegt, so ist die Haltebremse B über die Schaltelemente M1 und M4 mit dieser Betriebsspannung verbunden. In der Figur 1 ist schematisch eine zentrale, vom Motor M und der Haltebremse B entfernt angeordnete Steuerung S dargestellt, die die Versorgungsspannung UB einschalten kann, um die Bremse B zu lösen, und ausschalten kann, um die Bremse B einfallen zu lassen.

Das Schaltelement M4 ist dauerhaft eingeschaltet, sobald die Betriebsspannung UB anliegt. Das Schaltelement M1 wird hingegen nach dem Öffnen der Bremse getaktet, um so die gewünschte reduzierte Haltespannung zu erzeugen. Da solche Schaltelemente M1 als n-Kanal MOSFETs günstiger sind als solche mit p-Kanal (n-Kanal ermöglicht schnelleres Schalten bei gleichem On-Widerstand), ist die gesamte Schaltungsanordnung auf das höhere, positive Potential 24V bezogen, und nicht wie sonst üblich auf das Potential 0V.

Zur Ansteuerung des Schaltelements M1 dient ein aus den Schaltelementen Q3 und Q4 zusammengesetzter Komplementärtreiber, der wiederum vom Schaltelement Q1 angesteuert wird. Dabei dient Schaltelement Q1 als Level-Shifter, der die auf 24V bezogenen Schaltpulse v4 des Komparators U1 auf die Schaltelemente Q3, Q4 überträgt, die auf 0V bezogen sind. Das Schaltelement Q1 muss daher mit Spannungspulsen versorgt werden, anhand derer letztlich das Schaltelement M1 vor der Haltebremse B so geöffnet und geschlossen wird, dass jederzeit die benötigte Spannung an der Haltebremse B anliegt.

So muss für eine gewisse Zeit nach dem Einschalten der Betriebsspannung UB diese Spannung voll an der Haltebremse B anliegen, bis diese sicher geöffnet hat. Ein Zeitintervall von etwa einer Sekunde hat sich dafür bewährt. Danach soll die Spannung über der Haltebremse B auf die niedrigere Haltespannung eingestellt werden, die etwa der halben Betriebsspannung UB entsprechen kann. Hierzu muss das Schaltelement M1 mit einem Tastverhältnis von beispielsweise 50% gepulst betrieben werden. So ein Pulsmuster muss also am Eingang des Schaltelements Q1 bereit gestellt werden.

Hierzu dient der Komparator U1, an dessen einen Eingang eine Referenzspannung v2 anliegt. Diese Referenzspannung wird über eine Zenerdiode D6 und einen Widerstand R15 vom oberen Potential +24V der Betriebsspannung UB abgeleitet. Dank der Zenerdiode D6 ist diese Referenzspannung v2 unabhängig von eventuellen Spannungsabfällen auf der Zuleitung der Betriebsspannung UB. Das bedeutet, dass auch ein leichtes Absinken der Betriebsspannung UB am Eingang der Schaltungsanordnung nicht zu einer reduzierten Referenzspannung v2 führt.

Am zweiten Eingang des Komparators U1 liegt eine von der Haltebremse B abgegriffene Spannung v3. Da die Schaltungsanordnung auf das obere Potential 24V bezogen ist, wird diese Spannung v3 vom negativen Anschluss -Vb abgegriffen und über einen Spannungsteiler aus den Widerständen R4 und R12 passend zur Referenzspannung v2 eingestellt. Unmittelbar an der Klemme -Vb wird ein Rechtecksignal abgegriffen, das jedoch am Eingang des Komparators U1 mittels eines Glättungskondensators C1 in eine Dreieckspannung umgewandelt wird.

Fällt nun die an der Haltebremse B abgegriffene und geglättete Spannung v3 unter die Referenzspannung v2, so gibt der Komparator U1 eine Spannung v4 ab, die das Schaltelement Q1 sperrt. Über den Komplementärtreiber Q3, Q4 wird dann das Schaltelement M1 gesperrt, die Spannung über der Haltebremse B steigt an. Das Ausgangssignal v4 des Komparators U1 wird außerdem über den Widerstand R2 auf die Referenzspannung v2 rückgekoppelt. Dadurch wird die Schwelle, bei der der Komparator U1 bei steigender Spannung v3 wieder abschaltet, etwas nach oben verschoben, so dass eine Schalthysterese entsteht. Durch die Wahl von R2 kann der Betrag dieser Hysterese und damit die Schaltfrequenz des Komparators U1 beeinflusst werden. Bewährt haben sich hier Schaltfrequenzen im Bereich von 1 - 10 kHz. Durch den auf diese Weise gepulsten Betrieb des Schaltelements M1, und dank der Unabhängigkeit der Referenzspannung v2 von Leitungsverlusten bei der Zuführung der Betriebsspannung UB, kann an der Haltebremse B eine Haltespannung sehr definiert und nahe am günstigsten Punkt eingestellt werden, bei dem die Haltebremse noch sicher geöffnet bleibt, bei dem aber keine unnötige Verlustleistung im Elektromagnet der Bremse B umgesetzt wird. Außerdem fällt die Bremse B auch schneller wieder ein, wenn die Abschaltung der Betriebsspannung von der niedrigeren Haltespannung aus erfolgt.

Da die Schaltungsanordnung aber auch dafür sorgen muss, dass zum Öffnen der Haltebremse B zunächst die volle Betriebsspannung UB an der Haltebremse B anliegt, sorgt ein Startkondensator C8 dafür, dass während einer kurzen Zeitspanne nach dem Anlegen der Betriebsspannung UB noch kein Pulsbetrieb des Schaltelements M1 stattfindet. Unmittelbar nach dem Anlegen der Betriebsspannung ist nämlich v3 noch niedriger als v2. Damit Schaltet der Komparator U1 durch, und über Schaltelement M1 wird die Haltebremse B mit der vollen Betriebsspannung UB versorgt. Damit steigt auch das an der Haltebremse B bei -Vb abgegriffene Potential an. Es fließt dann ein Strom in Richtung Startkondensator C8, der diesen auflädt. Bis diese Aufladung nach ca. einer Sekunde abgeschlossen ist, bleibt v3 unterhalb der Referenzspannung v2 - es findet also noch kein Pulsbetrieb statt, das Schaltelement M1 bleibt dauerhaft geschlossen, die Haltebremse B wird mit voller Betriebsspannung UB beaufschlagt und damit schnellst möglich geöffnet.

Erst wenn der Startkondensator C8 nach dieser ersten Sekunde vollständig geladen ist, steigt v3 über v2 hinaus an, und der oben beschriebene Pulsbetrieb setzt ein. Die Spannung über der Haltebremse B wird nun auf die Haltespannung reduziert.

Wie erwähnt ist das Schaltelement M4 stets leitend, sobald die Betriebsspannung UB anliegt. Über dieses Schaltelement M4 ist die obere Klemme +Vb der Haltebremse B mit dem oberen Potential 24V verbunden. Der Pulsbetrieb wird mit dem Schaltelement M1 erzwungen, das die untere Klemme -Vb der Haltebremse B mit dem unteren Potential 0V verbindet. Der Freilauf nach jeder Abschaltung von M1 erfolgt über die Freilaufdiode D1.

Nach dem Abschalten der Betriebsspannung UB soll die Haltebremse B möglichst schnell, innerhalb weniger Millisekunden einfallen. Wegen der recht hohen Induktivität der Spule des Elektromagneten in der Haltebremse B ist es hierzu vorteilhaft, den Freilaufpfad aktiv abzuschalten. Dies wird über das Schaltelement M4 erreicht, das ja nur bei anliegender Betriebsspannung UB leitend ist, und das daher bei Wegfall der Betriebsspannung UB abschaltet. Die in der Haltebremse B gespeicherte Energie wird dann thermisch in der Suppressordiode D4 vernichtet, die parallel zum Schaltelement M4 geschaltet ist. Dieses Schaltelement kann also auch als Freilaufschaltelement M4 bezeichnet werden.

Beim Abschalten der Haltebremse B durch das Abschalten der Betriebsspannung UB kommt außerdem eine Entladediode D2 zum Einsatz. Diese entlädt die Kapazitäten C1 und vor allem C8, damit bei einem erneuten Lösen der Haltbremse B kurze Zeit später die volle Funktionalität der Schaltungsanordnung wieder zur Verfügung steht. Hierfür ist der Zeitbedarf für die Aufladung des Startkondensators C8 nach dem Einschalten der Betriebsspannung UB wie oben beschrieben entscheidend. Eine Restladung des Startkondensators C8 könnte diese Zeit verkürzen, und damit die Zeit, während der noch die volle Betriebsspannung UB an der Haltebremse B anliegt.

Am Eingang der Schaltungsanordnung erhöht Varistor R21 die Spannungsfestigkeit gegenüber Störimpulsen. Zusammen mit dem Kondensator C4 stabilisiert er die Eingangsspannung. Eine möglichst hohe Kapazität wäre für C4 wegen des getakteten Betriebs der Schaltungsanordnung wünschenswert, allerdings können Elektrolytkondensatoren wegen deren zu geringen Temperaturfestigkeit an dieser Stelle - nahe am Motor - nicht eingesetzt werden. Stattdessen kommt ein Keramikkondensator zum Einsatz.

Als weitere Maßnahme, die Schaltungsanordnung möglichst robust zu gestalten, wurde darauf geachtet, dass keine niederohmigen Verbindungen von 24V zu 0V den Komparator U1 beeinflussen. R23 und R16 blocken hohe Ströme bei schnell ansteigender Versorgungsspannung ab.

## Patentansprüche

1. Schaltungsanordnung zur Versorgung einer elektromagnetischen Haltebremse (B) eines Elektromotors (M) mit einer Betriebsspannung (UB) zum Lösen der Haltebremse (B), sowie einer gegenüber der Betriebsspannung reduzierten Haltespannung zum Halten der geöffneten Haltebremse (B), wobei die Schaltungsanordnung einen Spannungsregler enthält, der eingerichtet ist, die reduzierte Spannung nach dem Lösen der Haltebremse (B) unabhängig von der Betriebsspannung (UB) auf einen festen Wert zu regeln, wobei die Schaltungsanordnung einen Komparator (U1) umfasst, der eine Referenzspannung (v2) mit einer an der Haltebremse (B) abgegriffenen und über einen Spannungsteiler (R4, R12) zur Verfügung gestellten Spannung (v3) vergleicht, und der eingerichtet ist, an seinem Ausgang ein pulsweitenmoduliertes Signal (v4) zu erzeugen, mit dem ein Schaltelement (M1) steuerbar ist, über das die Haltebremse (B) getaktet mit der Betriebsspannung (UB) beaufschlagt ist, wodurch sich im Mittel die Haltespannung einstellt, **dadurch gekennzeichnet, dass** der Komparator (U1) am Eingang für die abgegriffene Spannung (v3) so mit einem Startkondensator (C8) verbunden ist, dass erst dann ein pulsweitenmoduliertes Signal (v4) am Ausgang des Komparators (U1) abgegeben wird, wenn dieser Startkondensator (C8) ausreichend geladen ist, und dass dadurch zunächst nach dem Anlegen der Betriebsspannung (UB) an die Schaltungsanordnung die Haltebremse (B) mit der vollen Betriebsspannung (UB) beaufschlagt ist, wobei der Startkondensator (C8) so dimensioniert ist, dass die Zeit bis zu dessen ausreichender Aufladung zum Lösen der Haltebremse (B) ausreicht, und wobei die Betriebsspannung (UB) von einer übergeordneten, von Motor (M) und Haltebremse (B) getrennt angeordneten Steuerung (S) zugeführt ist, und wobei die Schaltungsanordnung in oder am Motor (M) oder in oder an der Haltebremse (B) angeordnet ist.

2. Schaltungsanordnung nach Anspruch 1, **dadurch gekennzeichnet, dass** die an der Haltebremse (B) abgegriffene Spannung (v3) mittels eines Glättungskondensators (C1) zu einer Dreieckspannung geformt ist.

3. Schaltungsanordnung nach Anspruch 1 oder 2, **dadurch gekennzeichnet, dass** der Ausgang des Komparators (U1) auf die Referenzspannung (V2) rückgekoppelt ist.

4. Schaltungsanordnung nach einem der vorhergehenden Ansprüche, **dadurch gekennzeichnet, dass** die Referenzspannung (v2) mittels einer Zenerdiode (D6) von der Betriebsspannung (UB) abgeleitet ist

5. Schaltungsanordnung nach einem der vorhergehenden Ansprüche, **dadurch gekennzeichnet, dass** eine Entladediode (D2) den Startkondensator (C8) entlädt, falls keine Betriebsspannung (UB) an der Schaltungsanordnung anliegt.

6. Schaltungsanordnung nach einem der vorhergehenden Ansprüche, **dadurch gekennzeichnet, dass** die Schaltungsanordnung das höhere Potential (24V) der Betriebsspannung (UB) als Bezugspotential verwendet, und dass das Schaltelement (M1) als n-Kanal MOSFET ausgebildet ist, der einen negativen Anschluss der Haltebremse (B) mit dem unteren Potential (0V) der Betriebsspannung (UB) verbindet.

7. Schaltungsanordnung nach einem der vorhergehenden Ansprüche, **dadurch gekennzeichnet, dass** ein Freilaufschaltelement (M4) einen Freilaufstrom durch die Haltebremse (B) sperrt, wenn keine Betriebsspannung (UB) an der Schaltungsanordnung anliegt.

8. Schaltungsanordnung nach Anspruch 7, **dadurch gekennzeichnet, dass** eine Suppressordiode (D4) parallel zum Freilaufschaltelement (M4) geschaltet ist.

## Claims

1. Circuit arrangement for supplying an electromagnetic holding brake (B) of an electric motor (M) with an operating voltage (UB) in order to release the holding brake (B) and with a holding voltage, which is reduced compared to the operating voltage, in order to hold the open holding brake (B), and wherein the circuit arrangement contains a voltage regulator, which is set up to regulate the reduced voltage to a fixed value after the release of the holding brake (B) irrespective of the operating voltage (UB), wherein the circuit arrangement comprises a comparator (U1), which compares a reference voltage (v2) with a voltage (v3), which is tapped at the holding brake (B) and provided via a voltage divider (R4, R12), and which is set up to generate a pulse-width-modulated signal (v4) at the output thereof, using which signal a switching element (M1) is able to be controlled, via which switching element the holding brake (B) is supplied with the operating voltage (UB) in a clocked manner, as a result of which the holding voltage is produced on average, **characterized in that** the comparator (U1) is connected to a starting capacitor (C8) at the input for the tapped voltage (v3) in such a way that a pulse-width-modulated signal (v4) is output at the output of the comparator (U1) only when said starting capacitor (C8) is sufficiently charged and **in that** as a result the holding brake (B) is supplied with the full operating voltage (UB) only after the operating voltage (UB) has been applied to the circuit arrangement, wherein the starting capacitor (C8) is dimensioned so that the time until it is sufficiently charged is sufficient in order to release the holding brake (B), and wherein the operating voltage (UB) is fed by a superordinate controller (S) arranged separately from the motor (M) and the holding brake (B), and wherein the circuit arrangement is arranged in or on the motor (M) or in or on the holding brake (B).

2. Circuit arrangement according to Claim 1, **characterized in that** the voltage (v3) tapped at the holding brake (B) is shaped so as to form a triangular waveform voltage by means of a smoothing capacitor (C1).

3. Circuit arrangement according to Claim 1 or 2, **characterized in that** the output of the comparator (U1) is fed back to the reference voltage (V2).

4. Circuit arrangement according to one of the preceding claims, **characterized in that** the reference voltage (v2) is derived from the operating voltage (UB) by means of a Zener diode (D6).

5. Circuit arrangement according to one of the preceding claims, **characterized in that** a discharge diode (D2) discharges the starting capacitor (C8) if there is no operating voltage (UB) applied to the circuit arrangement.

6. Circuit arrangement according to one of the preceding claims, **characterized in that** the circuit arrangement uses the higher potential (24V) of the operating voltage (UB) as reference potential and **in that** the switching element (M1) is designed as an n-channel MOSFET, which connects a negative terminal of the holding brake (B) to the lower potential (0V) of the operating voltage (UB).

7. Circuit arrangement according to one of the preceding claims, **characterized in that** a freewheeling switching element (M4) blocks a freewheeling current through the holding brake (B) if there is no operating voltage (UB) applied to the circuit arrangement.

8. Circuit arrangement according to Claim 7, **characterized in that** a suppressor diode (D4) is connected in parallel with the freewheeling switching element (M4).

## Revendications

1. Agencement de circuit permettant d'alimenter un frein de maintien électromagnétique (B) d'un moteur électrique (M) en tension de service (UB) pour le desserrage du frein de maintien (B) ainsi qu'en tension de maintien, réduite par rapport à la tension de service, pour le maintien du frein de maintien (B) ouvert, et dans lequel l'agencement de circuit comporte un régulateur de tension qui est aménagé pour réguler la tension réduite après le desserrage du frein de maintien (B) sur une valeur fixe, indépendamment de la tension de service (UB), l'agencement de circuit comprenant un comparateur (U1) qui compare une tension de référence (v2) à une tension (v3) prélevée au niveau du frein de maintien (B) et fournie par l'intermédiaire d'un diviseur de tension (R4, R12), et qui est aménagé pour produire à sa sortie un signal (v4) modulé en largeur d'impulsion qui permet de commander un élément de commutation (M1) par lequel le frein de maintien (B) est soumis de manière cadencée à la tension de service (UB), moyennant quoi la tension de maintien se règle sur la moyenne,
**caractérisé en ce que** le comparateur (U1) est relié au niveau de l'entrée pour la tension prélevée (v3) à un condensateur de démarrage (C8) de telle sorte qu'un signal (v4) modulé en largeur d'impulsion n'est délivré à la sortie du comparateur (U1) que si ce condensateur de démarrage (C8) est chargé suffisamment, et **en ce que** le frein de maintien (B) est ainsi soumis à la pleine tension de service (UB) d'abord après l'application de la tension de service (UB) à l'agencement de circuit, le condensateur de démarrage (C8) étant dimensionné de telle sorte que le délai jusqu'à ce qu'il soit chargé suffisamment pour le desserrage du frein de maintien (B) est suffisant, et dans lequel la tension de service (UB) est alimentée par un dispositif de commande (S) de niveau supérieur, disposé séparément du moteur (M) et du frein de maintien (B), et l'agencement de circuit étant disposé dans ou sur le moteur (M) ou dans ou sur le frein de maintien (B).

2. Agencement de circuit selon la revendication 1, **caractérisé en ce que** la tension (v3) prélevée au niveau du frein de maintien (B) est formée en tension en delta au moyen d'un condensateur de lissage (C1).

3. Agencement de circuit selon la revendication 1 ou 2, **caractérisé en ce que** la sortie du comparateur (U1) est renvoyée à la tension de référence (V2).

4. Agencement de circuit selon l'une quelconque des revendications précédentes, **caractérisé en ce que** la tension de référence (v2) est dérivée de la tension de service (UB) au moyen d'une diode Zener (D6).

5. Agencement de circuit selon l'une quelconque des revendications précédentes, **caractérisé en ce qu'**une diode de décharge (D2) décharge le condensateur de démarrage (C8) si aucune tension de service (UB) n'est appliquée à l'agencement de circuit.

6. Agencement de circuit selon l'une quelconque des revendications précédentes, **caractérisé en ce que** l'agencement de circuit utilise le potentiel supérieur (24V) de la tension de service (UB) comme potentiel de référence, et **en ce que** l'élément de commutation (M1) est réalisé sous la forme d'un MOSFET de canal n qui relie une borne négative du frein de maintien (B) au potentiel inférieur (0V) de la tension de service (UB).

7. Agencement de circuit selon l'une quelconque des revendications précédentes, **caractérisé en ce qu'**un élément de commutation à roue libre (M4) bloque un courant de roue libre à travers le frein de maintien (B) si aucune tension de service (UB) n'est appliquée à l'agencement de circuit.

8. Agencement de circuit selon la revendication 7, **caractérisé en ce qu'**une diode de suppression (D4) est connectée en parallèle à l'élément de commutation à roue libre (M4).
